(19) Europäisches Patentamt
European Patent Office
Office européen des brevets

(11) Publication number: **0 407 666 A1**

## (12) EUROPEAN PATENT APPLICATION

(21) Application number: **89307192.8**

(22) Date of filing: **14.07.89**

(51) Int. Cl.⁵: **C08J 7/04**, C08F 255/04, C09D 151/06, //(C08F255/04, 222:00),C08L23:16

The title of the invention has been amended (Guidelines for Examination in the EPO, A-III, 7.3).

(43) Date of publication of application: **16.01.91 Bulletin 91/03**

(84) Designated Contracting States:
**AT BE CH DE ES FR GB GR IT LI LU NL SE**

(71) Applicant: **MITSUI PETROCHEMICAL INDUSTRIES, LTD.**
**2-5, Kasumigaseki 3-chome Chiyoda-ku Tokyo 100(JP)**

(72) Inventor: **Inagaki, Hajime**
**c/o Mitsui Petrochem. Ind. Ltd. 1-2 Waki 6-chome**
**Waki-cho Kuga-gun Yamaguchi-ken(JP)**
Inventor: **Saitou, Tadao**
**c/o Mitsui Petrochem. Ind. Ltd. 1-2 Waki 6-chome**
**Waki-cho Kuga-gun Yamaguchi-ken(JP)**

(74) Representative: **Cresswell, Thomas Anthony et al**
**J.A. Kemp & Co. 14 South Square Gray's InnInn**
**London WC1R 5EU(GB)**

(54) **Surface-treating agent for the treatment of a moulded rubber article.**

(57) Disclosed is a method for the surface treatment of a polyolefin cured rubber molded article, which comprises coating the surface of the polyolefin cured rubber molded article with a solution formed by dissolving in an organic solvent a modified polymer having an intrinsic viscosity $\eta$ of at least 0.3, which is formed by graft-copolymerizing a propylene/ethylene copolymer having a propylene content of 10 to 90 mole% with 0.5 to 15% by weight of maleic acid or an anhydride thereof.

If a polyolefin cured molded article is surface-treated according to this method, a coating of a paint or other resin can be formed with a good adhesion on the treated surface of the polyolefin cured molded article, and this coating has a very high peel strength and is excellent in volatile oil resistance, thermal shock resistance and water resistance.

EP 0 407 666 A1

## METHOD FOR SURFACE TREATMENT OF RUBBER MOLDED ARTICLE, SURFACE-TREATING AGENT USED FOR THIS SURFACE TREATMENT, PROCESS FOR PREPARATION OF THIS SURFACE-TREATING AGENT, AND CURED RUBBER MOLDED ARTICLE FORMED BY USING THIS SURFACE-TREATING AGEN

Background of the Invention

(1) Field of the Invention

The present invention relates to a method for the surface treatment of a rubber molded article, a surface-treating agent to be used for this surface treatment, a process for the preparation of this surface-treating agent, and a cured rubber article formed by using this surface-treating agent. More particularly, the present invention relates to a method for the surface treatment of a cured rubber article of a polyolefin (hereinafter referred to as "EPDM") such as an ethylene/propylene/diene/methylene linkage terpolymer (EPDM), in which the surface of the EPDM cured rubber molded article is undercoated to improve the adherence of a paint or the like to the cured rubber molded article, and also to a molded article treated according to this surface treatment method.

(2) Description of the Prior Art

In EPDM cured rubber molded articles as well as in other synthetic resin molded articles, the value added is increased by forming a coating or molded article of a paint or other resin on the surface of the molded article. However, a molded article composed of an EPDM cured rubber has a small polarity and the adherence to an ordinary paint is poor. Accordingly, as the means for obviating this disadvantage, there has been adopted a method in which SBR (styrene/butadiene rubber), NBR (acrylonitrile/butadiene rubber), chloroprene rubber or butyl rubber, having a good adhesion to a paint, is blended into EPDM for improving the paint adhesion. However, if such a rubber is blended, excellent characteristics inherently possessed by the EPDM cured rubber, such high weatherability, heat resistance and ozone resistance, are degraded.

Japanese Examined Patent Publication (Kokoku) No. 44-958 discloses a liquid for treating a polyolefin molded article, which comprises a solvent solution of amorphous polypropylene modified at a specific ratio with maleic acid or an anhydride thereof, Japanese Unexamined Patent Publication (Kokai) No. 49-10890 discloses a surface-treating agent comprising a modified polyolefin obtained by chemically bonding an alicyclic carboxylic acid having a cis-type unconjugated double bond in the ring, an $\alpha,\beta$-unsaturated carboxylic acid or an anhydride thereof to an amorphous polyolefin.

These surface-treating agents are advantageous in that only by coating the surface-treating agent on the surface of a polyolefin molded article, the adhesion to a paint or the like is improved, and the time required for the treatment can be shortened and the treatment process can be simplified. On the other hand, if these surface-treating agents are applied to an EPDM molded article, the adherence is degraded with the lapse of time, and since coatings formed on molded articles by application of these surface-treating agents are poor in the flexibility and bondability, the coatings fail to follow a high softness or flexibility of the rubber and troubles such as cracking of the coatings are caused.

In Japanese Examined Patent Publication (Kokoku) No. 62-21027, we previously proposed a surface-treating agent comprising a solution of a rubber or a polar group-containing addition polymerization resin, which is undercoated on the surface of a polyolefin molded article for improving the adherence to a paint or the like. Since this surface-treating agent shows an excellent paint adherence when applied to the surface of a molded article of polyethylene or polyolefin, the surface-treating agent is widely used in the fields of sundries, containers, automobile parts, fibers and non-woven fabrics.

Recently, an EPDM cured rubber is used in large quantities in molded articles for automobiles, and the desire to enhance the paint adherence increases and it is now required that the coating should not easily be peeled by contact with a volatile oil (volatile oil resistance), the coating should not be peeled under a violent change of the temperature (thermal shock resistance) and the adherence should sufficiently follow the elasticity of the rubber. However, the conventional surface-treating agents and cured rubber molded articles formed by using these surface-treating agents do not sufficiently satisfy these requirements.

## Summary of the Invention

The present invention has been completed as the result of our investigation made with a view to solving the foregoing problems.

More specifically, in accordance with one fundamental aspect of the present invention, there is provided a method for the surface treatment of a polyolefin cured rubber molded article, which comprises coating the surface of the polyolefin cured rubber molded article with a solution formed by dissolving in an organic solvent a modified polymer having an intrinsic viscosity $\eta$ of at least 0.3, which is formed by graft-copolymerizing a propylene/ethylene copolymer having a propylene content of 10 to 90 mole% with 0.5 to 15% by weight of maleic acid or an anhydride thereof.

In accordance with another aspect of the present invention, there is provided a surface-treating agent for a polyolefin cured rubber molded article, which comprises a solution in an organic solvent of a modified polymer having an intrinsic viscosity $\eta$ of at least 0.3, which is formed by graft-copolymerizing a propylene/ethylene copolymer having a propylene content of 10 to 90 mole% with 0.5 to 15% by weight of maleic acid or an anhydride thereof.

In accordance with still another aspect of the present invention, there is provided a process for the preparation of a surface-treating agent for a polyolefin cured rubber molded article, which comprises dissolving a propylene/ethylene copolymer having a propylene content of 10 to 90 mole% in an organic solvent, graft-copolymerizing maleic acid or an anhydride thereof to the copolymer in the presence of a radical generator, and optionally diluting the formed solution with an organic solvent.

In accordance with still another aspect of the present invention, there is provided a process for the preparation of a surface-treating agent for a polyolefin cured rubber molded article, which comprises supplying maleic acid or an anhydride thereof and a radical generator to a propylene/ethylene copolymer having a propylene content of 10 to 90 mole%, effecting graft copolymerization in the molten state and dissolving the obtained modified polymer in an organic solvent.

In accordance with still another aspect of the present invention, there is provided a polyolefin cured rubber molded article, which comprises a polyolefin cured rubber molded article, an undercoat, formed on the surface of the molded article, of a modified polymer having an intrinsic viscosity $\eta$ of at least 0.3, which is obtained by graft-copolymerizing a propylene/ethylene copolymer having a propylene content of 10 to 90 mole% with 0.5 to 15% by weight of maleic acid or an anhydride thereof, and a coating of a paint or other resin formed on said undercoat on the surface of the molded article.

The reason why the surface-treating agent of the present invention shows an excellent surface-treating effect to an EPDM cured rubber molded article even when coated in a small amount has not been completely elucidated. However, it is presumed that the rubbery elasticity characteristics of the propylene/ethylene copolymer used as the base polymer of the surface-treating agent are quite similar to the dynamic characteristics of the EPDM cured rubber and both the components are intimately integrated with each other to have good influences on the manifestation of the surface-treating effect.

## Detailed Description of the Preferred Embodiments Base Polymer

The surface-treating agent of the present invention comprises as the main component a modified polymer obtained by graft-copolymerizing maleic acid or an anhydride thereof to a propylene/ethylene copolymer.

A propylene/ethylene random copolymer is preferred as the base propylene/ethylene copolymer of the modified polymer, and it is preferred that the propylene content be 10 to 90 mole%, especially 20 to 80 mole%, and the intrinsic viscosity $\eta$ (as measured in decalin at 135°C) be 0.3 to 20, especially 0.3 to 10.

If the propylene content is lower than 10 mole%, the volatile oil resistance of the surface-treating agent is insufficient, and if the propylene content is higher than 90 mole%, the solubility of the modified polymer in an organic solvent is degraded and the adherence of the surface-treating agent is reduced.

## Process for Preparation of Surface-Treating Agent

As the process for the preparation of the surface-treating agent of the present invention, there can preferably be adopted a solution process in which a polymer modified by dissolving the base copolymer in an organic solvent, adding maleic acid or an anhydride thereof and a radical generator to the solution and heating the solution with stirring is utilized, for example, a process in which the above-mentioned graft reaction liquid is used directly or after dilution with a solvent, or a process in which the formed modified polymer is once isolated and is then dissolved in a solvent, and a melting process in which the respective components are supplied to an extruder, the graft copolymerization is effected in the molten state and the obtained modified copolymer is dissolved in an organic solvent. If the reaction liquid is diluted with an organic solvent in the above-mentioned solution process, a homogeneous modified polymer can be obtained and the intended surface-treating agent can be obtained by the simple operation.

It is preferred that maleic acid or an anhydride and the radical generator be sequentially added. In this case, precipitation or gelation of the copolymer can be prevented and maleic acid or its anhydride can be uniformly graft-copolymerized to the copolymer.

Preferred conditions for the graft copolymerization will now be described. Maleic acid or an anhydride thereof is sequentially added at an average speed of 1 to 100 millimoles/min/kg of the copolymer, especially 2 to 20 millimoles/min/kg of the copolymer, to a copolymer solution comprising 10 to 500 kg, especially 100 to 400 kg, of the propylene/ethylene copolymer dissolved in 1 $m^3$ of an organic solvent. It is preferred that the radical initiator be sequentially added simultaneously with maleic acid or its anhydride. The average addition speed of the radical initiator is about $5 \times 10^{-5}$ to about 50 millimoles/min/kg of the copolymer, especially about $10^{-2}$ to about 5 millimoles/min/kg of the copolymer, and it is preferred that the molar ratio of the radical initiator to maleic acid or its anhydride be from about 1/100 to about 3/5, especially from about 1/20 to about 1/2.

It is preferred that the graft reaction be carried out while heating the copolymer solution with stirring, and it also is preferred that the reaction temperature be higher by at least 100°C than the melting point of the copolymer, especially about 120 to about 160°C. In general, the reaction time is 2 to 10 hours. The reaction can be carried out batchwise or in a continuous manner, but in order to effect the grafting uniformly, it is preferred that the reaction be carried out batchwise.

According to the above-mentioned process, formation of a homopolymer of maleic acid is substantially controlled, and the amounts of the unreacted monomer, radical initiator and its decomposition product left at the termination of the reaction can be considerably reduced.

It is preferred that the amount of maleic acid or its anhydride in the obtained graft-modified copolymer be 0.5 to 15% by weight, especially 3 to 10% by weight.

If the amount of maleic acid or its anhydride grafted to the copolymer is smaller than 0.5% by weight, the paint adherence is insufficient, and if the amount of maleic acid or its anhydride is larger than 15% by weight, the intrinsic viscosity $\eta$ of the graft-modified copolymer is reduced, and the cohesive force is lowered and the water resistance of the coating is degraded.

The obtained solution of the graft-modified copolymer obtained according to the above-mentioned process can be used as the surface-treating agent of the present invention directly or after dilution with an organic solvent, and in the obtained surface-treating agent, the concentration of the modified copolymer in the solution is 10 to 100 kg/$m^3$ of the solvent, preferably 20 to 60 kg/$m^3$ of the solvent. If this surface-treating agent of the present invention is used, an excellent surface-treating effect can be attained with a small amount used of the surface-treating agent. The amount coated of the surface-treating agent as the solid is preferably 0.1 to 50 g/$m^2$, especially preferably about 1 to about 20 g/$m^2$.

Any of radical generators capable of promoting the reaction of the copolymer with maleic acid or its anhydride can be used as the radical generator for the grafting reaction, but organic peroxides and organic peresters are especially preferred. As specific examples, there can be mentioned benzoyl peroxide, dichlorobenzoyl peroxide, dicumyl peroxide, di-tert-butyl peroxide, 2,5-dimethyl-2,5-di(peroxybenzoato)-hexyne-3, 1,4-bis(tert-butylperoxyisopropyl)benzene, lauroyl peroxide, tert-butyl peracetate, 2,5-dimethyll-2,5-di(tert-butylperoxy)hexyne-3, 2,5-dimethyl-2,5-di(tert-butylperoxy)hexane, tert-butyl perbenzoate, tert-butyl perphenylacetate, tert-butyl persobutyrate, tert-butyl per-sec-octoate, tert-butyl perpivalate, cumyl perpivalate and tert-butyl perdiethylacetate. Furthermore, azo compounds such as azobisisobutylnitrile and dimethyl azobisobutyrate can be used. Among these radical generators, dialkyl peroxides such as dicumyl peroxide, di-tert-butyl peroxide, 2,5-dimethyl-2,5-di(tert-butylperoxy)hexyne-3, 2,5-dimethyl-2,5-di(tert-butyl-peroxy)hexane and 1,4-bis(tert-butylperoxyisopropyl)benzene are preferred.

In the case where the modification of the copolymer is carried out in an organic solvent and the reaction solution having the modified polymer concentration adjusted to 10 to 100 kg per $m^3$ of the organic solvent by or without dilution with the same organic solvent or other organic solvent is used as the spray-coating liquid, it is preferred that a radical generator, the decomposition product of which is substance having a relatively low boiling point, such as di-tert-butyl peroxide, tert-butyl peroxyisobutyrate or tert-butyl peroxyoctate, be used as the radical generator.

4

The reason is that if a radical generator as mentioned above is used, at the drying step for removing the organic solvent after the spray coating of the surface-treating liquid, also the decomposition product of the radical generator can be removed and the adherence to a paint is further improved.

As the organic solvent, there can be mentioned aromatic solvents such as benzene, toluene and xylene, aliphatic hydrocarbons such as hexane, heptane, octane and decane, and chlorinated hydrocarbons such as trichloroethylene, perchloroethylene, dichloroethylene, dichloroethane and chlorobenzene. Among them, aromatic hydrocarbons are preferred, and alkyl-substituted aromatic hydrocarbons are especially preferred.

Polyolefin Cured Rubber Molded Article

The polyolefin cured rubber molded article, to which the surface-treating agent of the present invention is to be applied, is prepared, for example, according to a process in which a rubber (EPDM) formed by copolymerizing ethylene, an $\alpha$-olefin and a diolefin is used and mixed with a softener, a filler and a curing agent by a known mixer such as a Banbury mixer or a roll to form a compound, the compound is molded into an optional shape by an extrusion molding machine, and the molded body is introduced into a curing tank and cured by heating, or is cured by a heat-pressing molding machine.

The copolymer rubber used in the present invention is a copolymer rubber comprising ethylene, an $\alpha$-olefin and a diolefin, in which the content of ethylene units is 55 to 73 mole%, preferably 60 to 70 mole%. As the $\alpha$-olefin, there can be mentioned, for example, propylene, butene-1, pentene-1, hexene-1 and octene-1, and among them, propylene and butene-1 are preferred and propylene is especially preferred. The content of $\alpha$-olefin units in the copolymer rubber is 17 to 45 mole%, especially 20 to 40 mole%. As the diolefin, there can be mentioned, for example, isoprene, butadiene, 1,4-pentadiene, 1,4-hexadiene, divinylbenzene, dicyclopentadiene, methylene-norbornene and ethylidene-norbornene. Among them, dicyclopentadiene, 1,4-hexadiene and ethyledene-norborne are preferably used and ethylidene-norbornene is especially preferably used.

It is preferred that the content of the diolefin units in the copolymer rubber be 0.5 to 10 mole%, especially 1.0 to 5 mole%. If the diolefin content is expressed by the iodine value, it is preferred that the iodine value of the copolymer rubber be 4 to 75, especially 8 to 40.

The surface-treating agent can be applied to the EPDM cured rubber molded article by spray coating, dip coating or brush coating, but spray coating is preferred. Namely, the surface-treating liquid is sprayed onto the surface of the molded article. The intended effect is sufficiently attained if the temperature of the treating liquid is normal temperature. After the treatment, the coated molded article is dried by natural drying or forced drying under heating.

The EPDM cured molded article having the surface treated with the surface-treating agent of the present invention is further coated with a paint or other resin coating material by electrostatic coating, spray coating, brush coating or the like. The paint or resin coating material can be coated by the method in which an undercoat is first formed and a topcoat is formed thereon. The kind of the paint used is not particularly critical, but if a coating having an especially high adhesion is desired, a solvent-type thermoplastic acrylic resin paint, a solvent-type thermosetting acrylic resin paint, an acryl-modified alkyd resin paint, an epoxy resin paint and a polyurethane paint are preferably used and a paint giving a soft coating, such as a polyurethane paint, is especially preferred.

The paint-coated EPDM cured rubber molded article is heated to cure the coating by an ordinary method such as hot air heating, infrared ray heating or high-frequency heating.

If the surface-treating agent of the present invention is undercoated on the surface of an EPDM cured rubber molded article by brush coating or spray coating, the paint adhesion is highly improved, and the coating formed on the surface of the cured rubber molded article is excellent in the smoothness and is highly improved in the volatile oil resistance and thermal shock resistance, that is, the durable adhesion of the coating to the molded article. These effects will become apparent from the examples given hereinafter.

The present invention will now be described in detail with reference to the following examples that by no means limit the scope of the invention.

Example 1

To 10 ℓ of toluene was added 3 kg of a propylene/ethylene copolymer having a propylene content of 67 mole% and an intrinsic viscosity $\eta$ of 2.05 as measured in decalin at 135°C, and the atmosphere in the system was replaced by nitrogen over a period of 1 hour. The temperature of the mixture was elevated to 145°C to dissolve the copolymer completely in toluene. Then, 382 g of maleic anhydride and 175 g of di-tert-butyl peroxide were supplied into the solution from different supply openings over a period of 4 hour with stirring, and the post reaction was carried out at 145°C for 2 hours with stirring and the reaction mixture was cooled to room temperature.

After the cooling, a part of the liquid reaction mixture was collected and thrown into a large quantity of acetone to precipitate a crumb-like modified copolymer. The formed precipitate was recovered by filtration, washed with acetone repeatedly and vacuum-dried at normal temperature two days and two nights to obtain a refined maleic anhydride-modified propylene/ethylene copolymer. The content of the maleic anhydride units in the modified copolymer was 5.3% by weight and the intrinsic viscosity $\eta$ of the modified copolymer was 0.76.

Then, 9 ℓ of toluene was added to 1 ℓ of the obtained reaction liquid, and the atmosphere of the system was replaced by nitrogen and the mixture was heated at 100°C and stirred for 1 hour to obtain a surface-treating liquid suitable for spray coating.

## Example 2

Into 1 kg of a pellet of a propylene/ethylene copolymer having a propylene content of 60 mole% and an intrinsic viscosity $\eta$ of 3.0 were incorporated 400 g of maleic anhydride and 200 g of 2,5-dimethyl-2,5-di(tert-butylperoxy)hexyne-3, and the mixture was supplied to a hopper of an extruder having a screw diameter of 25 mm, which was maintained at 200°C. The screw attached to the extruder was a Dulmage screw having an L/D ratio of 25, which was operated at 60 rpm.

The strand extruded from the die of the extruder was cooled by ice water, fed to a granulator and pelletized.

The obtained cured reaction pellet was once added into xylene and dissolved therein by elevating the temperature, and the solution was cooled to room temperature and a large quantity of acetone was added to the solution to obtain a crumb-like polymer precipitate. The precipitate was washed with a large quantity of acetone repeatedly and vacuum-dried two days and two nights. The content of the maleic anhydride units in the obtained refined modified copolymer was 3.5% by weight, and the intrinsic viscosity $\eta$ of the modified copolymer was 1.1.

The modified copolymer in the form of a solution in toluene was used as the surface-treating liquid.

## Examples 2 through 7 and Comparative Example 1

A compound was prepared by mixing EPDM with zinc flower, stearic acid, carbon black, paraffinic process oil, a curing promoter and sulfur, and the compound was molded and cured at 160°C by a heat-pressing molding machine to obtain a sheet having a size of 100 mm x 100 mm x 2 mm.

The surface-treating agent obtained in Example 1 was spray-coated at room temperature onto the obtained sheet by the air-spraying method and the coated sheet was dried by allowing the coated sheet to stand still at room temperature for about 5 minutes. The above procedures were repeated by changing the amount coated of the surface-treating agent as shown in Table 1.

Each of the coated sheets was spray-coated with a coating composition comprising a urethane paint and a thinner at a ratio of about 1/1 by the air-spraying method. The coated sheets were placed in an air oven and baked and dried at 80°C for 30 minutes. The respective sheets were allowed to stand still at room temperature for 24 hours and subjected to the following tests.

The peeling test was carried out by the square-cut peeling test method and the coating-peeling test method.

### (Square-Cut Peeling Test)

On the coated surface of the sheet, 100 square cuts of 1 mm x 1 mm were formed by a knife, and an adhesive tape (Cello-Tape supplied by Nichiban) was applied to the cut coated surface. The adherence was evaluated based on the number of the square cuts left when the adhesive type was peeled.

### (Coating-Peeling Test)

6

Longitudinal cuts were formed on the coated surface of the sheet at intervals of 10 mm by a knife. The upper portion of the coating cut at intervals of 10 mm was peeled and one end of an adhesive cellophane tape was bonded to the peeled portion of the coating, and the other end of the adhesive cellophane tape and the sheet were attached to a tensile tester and peeling was effected at a pulling speed of 50 mm/min. The stress at this peeling was recorded.

The measured value was expressed by the unit of g/cm.

(Initial Adhesion)

Each of the obtained sheets was directly subjected to the peeling test.

(Water Resistance)

Each sheet was immersed in warm water at 40°C for 240 hours, and was then subjected to the peeling test.

(Volatile Oil Resistance)

Each sheet was immersed in petroleum benzine at 25°C for 24 hours, and was then subjected to the peeling test.

(Thermal Shock Resistance)

Each sheet was exposed to 3 cycles of the temperature history of - 30°C x 1 hour, room temperature x 3 minutes, 1 hour in boiling water and room temperature x 5 minutes continuously, and was then subjected to the peeling test.

The obtained results are shown in Table 1.

Table 1

| | Amount (g/m²) of Coated Surface-Treating Agent | Initial Adhesion | | Water Resistance | | Volatile Oil Resistance | | Thermal Shock Resistance | |
|---|---|---|---|---|---|---|---|---|---|
| | | square-cut peeling test | coating-peeling test (peel strength, g/cm) | square-cut peeling test | coating-peeling test (peel strength, g/cm) | square-cut peeling test | coating-peeling test (peel strength, g/cm) | square-cut peeling test | coating-peeling test (peel strength, g/cm) |
| Example 3 | 20 | 100/100 | 1,900 | 100/100 | 1,910 | 100/100 | 1,800 | 100/100 | 1,950 |
| Example 4 | 10 | 100/100 | 1,870 | 100/100 | 1,890 | 100/100 | 1,960 | 100/100 | 2,000 |
| Example 5 | 5 | 100/100 | 1,860 | 100/100 | 1,960 | 100/100 | 1,870 | 100/100 | 1,890 |
| Example 6 | 2 | 100/100 | 2,010 | 100/100 | 1,900 | 100/100 | 2,000 | 100/100 | 2,010 |
| Example 7 | 1 | 100/100 | 2,000 | 100/100 | 2,100 | 100/100 | 2,100 | 100/100 | 2,060 |
| Comparative Example 1 | 0 | 0/100 | 10 | 0/100 | 10 | 0/100 | 10 | 0/100 | 10 |

From the results shown in Table 1 indicating the influence of the amount coated of the surface-treating agent on the peel strength, a conspicuous difference of the peel strength was found between the case where the surface-treating agent (modified polymer) of the present invention was not coated and the case where the surface-treating agent was coated in such a small amount as 1 g/m$^2$.

Examples 8 through 10 and Comparative Examples 2 and 3

Surface-treating agents were prepared in the same manner as described in Example 1 except that the kind of the propylene/ethylene copolymer used was changed as shown in Table 2. These surface-treating agents were coated on sheets molded in the same manner as in Example 3 through 7. The surface-treating agent-coating operation was carried out in the same manner as in Examples 3 through 7. The amount coated of the surface-treating agent was 2 g/m$^2$, and the maleic anhydride content in the graft-modified copolymer was about 6% by weight and the solvent used was toluene. A urethane paint (Planit S supplied by Dainippon Toryo) was coated on the surface-treating agent-coated surface in the same manner as in Example 3 through 7. The coated sheets were tested in the same manner as in Examples 3 through 7. The obtained results are shown in Table 2.

Table 2

| | Amount (g/m²) of Coated Surface-Tr-eating Agent | Initial Adhesion | | Water Resistance | | Volatile Oil Resistance | | Thermal Shock Resistance | |
|---|---|---|---|---|---|---|---|---|---|
| | | square-cut peeling test | coating-peeling test (peel strength, g/cm) | square-cut peeling test | coating-peeling test (peel strength, g/cm) | square-cut peeling test | coating-peeling test (peel strength, g/cm) | square-cut peeling test | coating-peeling test (peel strength, g/cm) |
| Comparative Example 2 | 5 | 0/100 | 50 | — | — | — | — | — | — |
| Example 8 | 20 | 100/100 | 1,350 | 100/100 | 1,260 | 100/100 | 1,400 | 100/100 | 1,350 |
| Example 9 | 60 | 100/100 | 2,010 | 100/100 | 1,900 | 100/100 | 2,000 | 100/100 | 2,010 |
| Example 10 | 80 | 100/100 | 1,800 | 100/100 | 1,700 | 100/100 | 1,930 | 100/100 | 1,870 |
| Comparative Example 3 | 95 | 25/100 | 150 | — | — | — | — | — | — |

Examples 11 through 15 and Comparative Examples 4 and 5

Surface-treating agents were prepared in the same manner as described in Example 1 except that the maleic anhydride content in the modified copolymer was changed as shown in Table 3. The surface-coating agents were coated on sheets prepared in the same manner as in Examples 3 through 7. The propylene content in the used propylene/ethylene copolymer was 60 mole%. The solvent used was toluene.

A urethane paint (R-263 supplied by Nippon Beechemical) was coated on the surface-treating agent-coated surfaces of the sheets. The sheets were tested in the same manner as in Examples 3 through 7. The obtained results are shown in Table 3.

From the results shown in Table 3, it is seen that if the content of maleic anhydride is lower than 0.5% by weight, the paint adhesion is insufficient, and if the content of maleic anhydride exceeds 15% by weight, the intrinsic viscosity $\eta$ is reduced and the cohesive force is lowered, resulting in degradation of the water resistance of the coating.

Example 16

The surface-treating agent was coated on a sheet molded in the same manner as in Examples 3 through 7. This coating operation was carried out in the same manner as in Examples 3 through 7. Then, the paint was coated on the surface-treating agent-coated surface and the coated sheet was tested in the same manner as in Examples 3 through 7. The obtained results are shown in Table 3.

Table 3

| | Amount (g/m²) of Coated Surface-Tr-eating Agent | [n] of Modified Polymer | Initial Adhesion | | Water Resistance | | Volatile Oil Resistance | | Thermal Shock Resistance | |
|---|---|---|---|---|---|---|---|---|---|---|
| | | | square-cut peeling test | coating-p-eeling test (peel strength, g/cm) | square-cut peeling test | coating-peeling test (peel strength, g/cm) | square-cut peeling test | coating-peeling test (peel strength, g/cm) | square-cut peeling test | coating-peeling test (peel strength, g/cm) |
| Comparative Example 4 | 0 | 2.31 | 0/100 | 20 | — | — | — | — | — | — |
| Example 11 | 2.0 | 1.86 | 100/100 | 1,530 | 100/100 | 970 | 100/100 | 1,360 | 100/100 | 1,200 |
| Example 12 | 4.2 | 1.20 | 100/100 | 2,010 | 100/100 | 1,900 | 100/100 | 2,000 | 100/100 | 2,010 |
| Example 13 | 7.3 | 0.52 | 100/100 | 2,100 | 100/100 | 1,800 | 100/100 | 2,010 | 100/100 | 1,860 |
| Example 14 | 9.8 | 0.48 | 100/100 | 1,980 | 100/100 | 1,480 | 100/100 | 1,900 | 100/100 | 1,750 |
| Example 15 | 14.3 | 0.32 | 100/100 | 1,050 | 100/100 | 860 | 100/100 | 900 | 100/100 | 1,000 |
| Example 16 | 4.0 | 1.05 | 100/100 | 2,200 | 100/100 | 2,070 | 100/100 | 2,000 | 100/100 | 1,900 |
| Comparative Example 5 | 15.8 | 0.26 | 100/100 | 870 | 98/099 | 350 | 100/100 | 600 | 100/100 | 450 |

EP 0 407 666 A1

## Claims

1. A method for the surface treatment of a polyolefin cured rubber molded article, which comprises coating the surface of the polyolefin cured rubber molded article with a solution formed by dissolving in an organic solvent a modified polymer having an intrinsic viscosity $\eta$ of at least 0.3, which is formed by graft-copolymerizing a propylene/ethylene copolymer having a propylene content of 10 to 90 mole% with 0.5 to 15% by weight of maleic acid or an anhydride thereof.

2. A surface-treating method according to claim 1, wherein the copolymer modified with maleic acid or an anhydride thereof is applied in an amount coated of 0.1 to 50 g/m².

3. A surface-treating agent for a polyolefin cured rubber molded article, which comprises a solution in an organic solvent of a modified polymer having an intrinsic viscosity $\eta$ of at least 0.3, which is formed by graft-copolymerizing a propylene/ethylene copolymer having a propylene content of 10 to 90 mole% with 0.5 to 15% by weight of maleic acid or an anhydride thereof.

4. A surface-treating agent as set forth in claim 3, wherein a part or all of the organic solvent is an organic solvent modified with maleic acid or an anhydride thereof.

5. A process for the preparation of a surface-treating agent for a polyolefin cured rubber molded article, which comprises dissolving a propylene/ethylene copolymer having a propylene content of 10 to 90 mole% in an organic solvent, graft-copolymerizing maleic acid or an anhydride thereof to the copolymer in the presence of a radical generator, and optionally diluting the formed solution with an organic solvent.

6. A process according to claim 5, wherein the organic solvent is an aromatic hydrocarbon.

7. A process according to claim 5, wherein the organic solvent is toluene.

8. A process according to claim 5, wherein the intrinsic viscosity $\eta$ of the propylene/ethylene copolymer is 0.3 to 20.

9. A process according to claim 5, wherein the content of maleic acid or an anhydride thereof in the modified polymer is 0.5 to 15% by weight.

10. A process for the preparation of a surface-treating agent for a polyolefin cured rubber molded article, which comprises supplying maleic acid or an anhydride thereof and a radical generator to a propylene/ethylene copolymer having a propylene content of 10 to 90 mole%, effecting graft copolymerization in the molten state and dissolving the obtained modified polymer in an organic solvent.

11. A process according to claim 10, wherein the intrinsic viscosity $\eta$ of the propylene/ethylene copolymer is 0.3 to 20.

12. A process according to claim 10, wherein the content of maleic acid or an anhydride thereof in the modified copolymer is 0.5 to 15% by weight.

13. A polyolefin cured rubber molded article, which comprises a polyolefin cured rubber molded article, an undercoat, formed on the surface of the molded article, of a modified polymer having an intrinsic viscosity of at least 0.3, which is obtained by graft-copolymerizing a propylene/ethylene copolymer having a propylene content of 10 to 90 mole% with 0.5 to 15% by weight of maleic acid or an anhydride thereof, and a coating of a paint or other resin formed on said undercoat formed on the surface of the molded article.

14. A polyolefin cured rubber molded article as set forth in Claim 13, wherein the polyolefin cured rubber is a rubber formed by copolymerizing ethylene, an α-olefin and a diolefin.

15. A polyolefin cured rubber molded article as set forth in Claim 14, wherein the polyolefin cured rubber, the ethylene content is 55 to 73 mole%, the α-olefin content is 17 to 45 mole% and the diolefin content is 0.5 to 10 mole%.

16. A polyolefin cured rubber molded article as set forth in Claim 13, wherein the coating of the paint or other resin is formed from a solvent-type thermoplastic acrylic resin paint, a solvent thermosetting acrylic resin paint, an acryl-modified alkyd resin, an epoxy resin paint or a polyurethane resin.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 009 971 (MITSUI PETROCHEMICAL INDUSTRIES LTD) * Totality * | 3-12 | C 08 J 7/04 C 08 F 255/04 C 09 D 151/06 // (C 08 F 255/04 C 08 F 222:00 ) C 08 L 23:16 |
| Y | | 1-16 | |
| X,Y | EP-A-0 074 811 (MITSUI PETROCHEMICAL INDUSTRIES LTD) * Totality * | 1-16 | |
| A | FR-A-2 226 289 (SUMITOMO CHEMICAL CO., LTD) * Claim 1; example 1 * | 1,13 | |

|  |  | TECHNICAL FIELDS SEARCHED (Int. Cl.5) |
|---|---|---|
|  |  | C 08 J C 09 D C 08 F |

The present search report has been drawn up for all claims

| Place of search | Date of completion of the search | Examiner |
|---|---|---|
| THE HAGUE | 27-03-1990 | HALLEMEESCH A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P0401)